(19) Europäisches Patentamt

European Patent Office

Office européen des brevets

(11) EP 0 860 631 B1

(12) FASCICULE DE BREVET EUROPEEN

(45) Date de publication et mention
de la délivrance du brevet:
17.04.2002 Bulletin 2002/16

(51) Int Cl.⁷: **F16H 59/04**, F16H 63/30

(21) Numéro de dépôt: 98400245.1

(22) Date de dépôt: 05.02.1998

(54) **Dispositif de transmission mécanique pour la commande d'une boîte de vitesses à rapports etages**

Vorrichtung mit mechanischer Übertragung zur Steuerung eines gestuften Geschwindigkeitswechselgetriebes

Mechanical transmission device for the control of a stepped change-speed gearbox

(84) Etats contractants désignés:
**CH DE ES GB IT LI PT SE**

(30) Priorité: **20.02.1997 FR 9701990**

(43) Date de publication de la demande:
**26.08.1998 Bulletin 1998/35**

(73) Titulaires:
- **AUTOMOBILES PEUGEOT**
  **75116 Paris (FR)**
- **AUTOMOBILES CITROEN**
  **92200 Neuilly-sur-Seine (FR)**

(72) Inventeur: **Collombet, Fabrice M.**
**75018 Paris (FR)**

(74) Mandataire: **Gendraud, Pierre et al**
**GIE PSA - Peugeot - Citroen,**
**Département Propriété Industrielle,**
**18, Rue des Fauvelles**
**92250 La Garenne Colombes (FR)**

(56) Documents cités:
EP-A- 0 849 507            FR-A- 2 437 952
GB-A- 2 054 773

# Description

L'invention est relative à un dispositif de transmission mécanique pour la commande d'une boîte de vitesses de véhicule automobile.

Un dispositif de transmission mécanique selon le préambule de la revendication 1 est connu.

Le document EP-A-849 507 a été publié après le dépot de la présente invention mais revendique une priorité antérieure à la priorité de cette invention. Ce document est, par conséquent, à considérer comme état de la technique dans le sens de l'article 54(3) EPC. Il montre un dispositif de transmission mécanique similaire à celui de la revendication 1 à la différence que la forme de la came est telle que le rapport de transmission de l'effort de pivotement n'est pas maximal vers la moitié de la course de manoeuvre mais bien vers la fin de celle-ci.

Le document GB-A-2 054 773 décrit un dispositif de changement de vitesses dans une transmission faisant usage de cames en interaction avec des doigts de commandes, ces cames comportant des profils tels que le rapport de transmission de l'effort est maximal lors de la synchronisation, c'est-à-dire vers la moitié de la course de manoeuvre.

L'invention se rapporte plus particulièrement aux commandes de boîtes de vitesses à rapports étagés équipées de synchroniseurs facilitant l'engagement des rapports. La réalisation des synchroniseurs est généralement telle que lors d'une manoeuvre pour le passage d'un rapport (ou d'une vitesse), l'effort à exercer, et transmis mécaniquement par un dispositif reliant le levier de vitesses à la boîte de vitesses, présente une valeur maximale vers la mi-course de cette manoeuvre, engendrant un point dur pouvant s'avérer désagréable pour l'utilisateur.

L'invention vise à pallier cet inconvénient, et propose des moyens simples pour atténuer la sensation de point dur lors du passage des rapports d'une boîte de vitesses.

Elle concerne un dispositif de transmission mécanique pour la commande d'une boîte de vitesses à rapports étagés, dans lequel un bras menant et un bras mené, respectivement reliés à un levier de manoeuvre et à un organe de la boîte de vitesses, pivotent respectivement sur deux axes fixes parallèles et sont reliés entre eux par un moyen de liaison.

Selon l'invention, le moyen de liaison comprend un doigt de l'un de deux bras, parallèle aux deux axes et coopérant avec une came qui est solidaire de l'autre bras et dont le profil est tel que la position du contact entre le doigt et la came, ainsi que la ligne d'action de la force transmise par ce contact, évoluent lors d'une manoeuvre de passage d'une vitesse de façon que le rapport entre l'effort de pivotement transmis au bras mené et celui appliqué au bras menant soit maximal vers la moitié de la course de manoeuvre.

Selon quelques dispositions intéressantes de l'invention :

- le doigt coopère avec la came par l'intermédiaire d'un galet ;
- le doigt est situé entre les deux axes et, au point mort de la commande, en alignement avec ceux-ci ;
- la came est constituée par un bord d'une lumière pratiquée dans le bras dont elle est solidaire ;
- la lumière comprend, symétriquement par rapport au plan médian du bras qui la comporte, deux tronçons formant approximativement un V et constituant chacun une came pour coopérer alternativement avec le doigt selon que la manoeuvre de passage s'effectue dans l'un ou l'autre de deux sens opposés.

Un mode de réalisation d'un dispositif de transmission mécanique selon l'invention est décrit ci-après, avec référence aux dessins annexés parmi lesquels :

- la figure 1 est une vue schématique de l'ensemble du dispositif ;
- les figures 2 à 4 sont des vues à plus grande échelle d'une partie du dispositif, en diverses positions correspondant respectivement au début, à la moitié et à la fin d'une manoeuvre de passage d'un rapport.

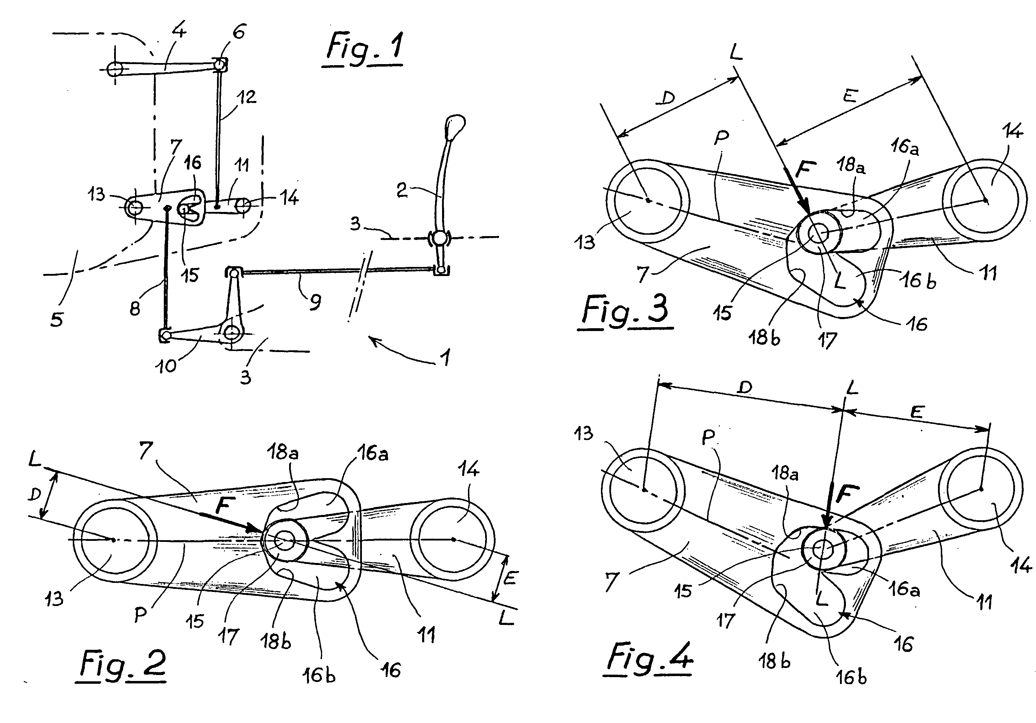

On voit à la figure 1 un dispositif de transmission mécanique 1 qui relie un levier de manoeuvre 2 pivotant sur la structure 3 d'un véhicule à un levier de commande 4 porté par une boîte de vitesses 5 et propre à provoquer, par déplacement d'une extrémité extérieure 6 qu'il comporte, l'engagement et le dégagement de rapports de la boîte de vitesses.

Ce dispositif 1 comporte un bras menant 7 relié au levier de manoeuvre 2 par deux tiges 8 et 9 reliées entre elles par un levier de renvoi 10 pivotant sur la structure du véhicule, et un bras mené 11 relié par une troisième tige 12 à l'extrémité 6 du levier de commande 4.

Les deux bras 7 et 11 pivotent respectivement sur deux axes parallèles 13 et 14 fixés à la boîte de vitesses ou à un groupe motopropulseur comportant celle-ci, et ils sont reliés entre eux, entre ces deux axes, par coopération d'un doigt 15 de l'un des deux bras avec une lumière 16 pratiquée dans l'autre, le doigt étant situé, en position moyenne correspondant au point mort de la boîte de vitesses, en alignement avec les deux axes 13,14.

Le doigt 15, solidaire du bras mené 11, s'étend parallèlement aux axes 13 et 14 en traversant le bras menant 7 par la lumière 16 qui est pratiquée dans ce bras en comprenant, symétriquement par rapport à son plan médian P, deux tronçons $16_a, 16_b$ qui forment approximativement un V divergeant vers l'axe 14 du bras mené 11.

Le doigt 15 est propre à coopérer, de préférence par l'intermédiaire d'un galet 17 monté rotatif sur lui, avec les bords de la lumière qui présentent, pour chacun des deux tronçons, une forme constituant une came $18_a, 18_b$ dont le profil est adapté de manière à faire varier la démultiplication de l'effort transmis au cours de chaque manoeuvre de passage d'un rapport de la boîte de vitesses.

Plus précisément, pour chaque tronçon $16_a$, $16_b$ de la lumière, la came présente une inclinaison, par rapport au plan médian P, qui est forte près de ce plan et qui s'atténue en s'en éloignant. Il en résulte, comme visible aux figures 2 à 4, une inclinaison variable de la force F exercée par le bras menant 7, sur le bras mené 11 au droit du contact entre le galet 17 et la came, où la ligne d'action L-L de la force est perpendiculaire à la came.

Cette force F résulte d'un effort de rotation appliqué au bras menant 7 à partir du levier de manoeuvre 2, et mesuré par le moment M de la force F par rapport à l'axe 13 (M = F x D, D étant la distance entre la ligne L-L et l'axe théorique de pivotement du bras 7), et elle transmet au bras 11 un effort de rotation mesuré par le moment N de la force F par rapport à l'axe 14 (N = F x E, E étant la distance entre la ligne L-L et l'axe théorique de pivotement du bras 11).

Le rapport $\frac{N}{M}$ entre l'effort de rotation N transmis par le bras mené 7 et celui M appliqué au bras menant représente une démultiplication ou une surmultiplication d'effort procurée par le mécanisme des figures 2 à 4. Ce rapport, égal au rapport $\frac{E}{D}$, varie lors d'une manoeuvre de passage puisque la ligne L-L d'application de la force F se déplace alors comme le contact entre le galet 17 et la came $18_a, 18_b$. Celle-ci est déterminée avec un profil tel que la position de ce contact et celle de la ligne d'action L-L évoluent, lors d'une manoeuvre de passage d'une vitesse, de façon que ce rapport $\frac{N}{M}$ soit maximal vers la moitié de la course de manoeuvre.

Ainsi, avec un tracé de came, donc de la lumière 16, conforme aux dessins annexés, ce rapport ($\frac{N}{M}$ ou $\frac{E}{D}$) est sensiblement égal à l'unité au début de la manoeuvre (figure 2), voisin de 1,25 à mi-course (figure 3), et proche de 0,75 en fin de manoeuvre. Il en résulte une atténuation de l'effort à appliquer au bras 7, donc au levier de manoeuvre 2, à mi-course c'est-à-dire lors de l'action du synchroniseur, habituellement génératrice d'un point dur, lequel est ici atténué sans accroissement de la course totale de manoeuvre grâce à la moindre démultiplication assurée en début et en fin de manoeuvre où l'effort à transmettre au levier 6 est beaucoup plus faible.

## Revendications

1. Dispositif de transmission mécanique (1) pour la commande d'une boîte de vitesses (5) à rapports étagés, dans lequel un bras menant (7) et un bras mené (11), respectivement reliés à un levier de manoeuvre (2) et à un organe (4) de la boîte de vitesses, pivotent respectivement sur deux axes fixes parallèles (13,14) et sont reliés entre eux par un moyen de liaison (15,16),
**caractérisé en ce que** le moyen de liaison comprend un doigt (15) de l'un (11) de deux bras, parallèle aux deux axes (13,14) et coopérant avec une came ($18_a, 18_b$) qui est solidaire de l'autre bras (7) et dont le profil est tel que la position du contact entre le doigt (15) et la came ($18_a, 18_b$), ainsi que la ligne (L-L) d'action de la force (F) transmise par ce contact, évoluent lors d'une manoeuvre de passage d'une vitesse de façon que le rapport $\frac{N}{M}$ entre l'effort de pivotement transmis au bras mené (11) et celui appliqué au bras menant (7) soit maximal vers la moitié de la course de manoeuvre.

2. Dispositif selon la revendication 1,
**caractérisé en ce que** le doigt (15) coopère avec la came ($18_a, 18_b$) par l'intermédiaire d'un galet (17).

3. Dispositif selon l'une des revendications 1 et 2,
**caractérisé en ce que** le doigt (15) est situé entre les deux axes (13,14) et, au point mort de la commande, en alignement avec ceux-ci.

4. Dispositif selon l'une des revendications précédentes,
**caractérisé en ce que** la came ($18_a, 18_b$) est constituée par un bord d'une lumière (16) pratiquée dans le bras (7) dont elle est solidaire.

5. Dispositif selon la revendication 4,
**caractérisé en ce que** la lumière (16) comprend, symétriquement par rapport au plan médian (P) du bras (7) qui la comporte, deux tronçons ($16_a, 16_b$) formant approximativement un V et constituant chacun une came ($18_a, 18_b$) pour coopérer alternativement avec le doigt (15) selon que la manoeuvre de passage s'effectue dans l'un ou l'autre de deux sens opposés.

## Patentansprüche

1. Vorrichtung zur mechanischen Übertragung (1) für die Bedienung eines gestuften Schaltgetriebes (5), bei der ein treibender Arm (7) und ein getriebener Arm (11), die mit einem Betätigungshebel (2) beziehungsweise einem Organ (4) des Schaltgetriebes verbunden sind, auf zwei parallelen festen Achsen (13, 14) verschwenken und miteinander über ein Verbindungsmittel (15, 16) verbunden sind,
**dadurch gekennzeichnet, dass** das Verbindungsmittel einen Finger (15) von einem (11) der beiden Arme umfasst, der parallel zu den beiden Achsen (13, 14) verläuft und mit einer Nocke ($18_a$, $18_b$) zusammenwirkt, die mit dem anderen Arm (7) fest verbunden ist und ein Profil aufweist, das bewirkt, dass sich die Position des Kontakts zwischen dem Finger (15) und der Nocke ($18_a$, $18_b$) sowie die Angriffslinie (L-L) der Kraft (F), die durch diesen Kontakt übertragen wird, bei einem Schaltvorgang derart verschieben, dass das Verhältnis N/M zwischen der auf den getriebenen Arm (11) übertragenen Schwenkkraft und der Kraft, die auf den treibenden Arm (7) wirkt, in etwa auf halbem Weg des Schaltvorgangs maximal ist.

2. Vorrichtung gemäß Anspruch 1, **dadurch gekennzeichnet, dass** der Finger (15) mit der Nocke (18a, 18b) über eine Rolle (17) zusammenwirkt.

3. Vorrichtung gemäß Anspruch 1 und 2, **dadurch gekennzeichnet, dass** der Finger (15) zwischen den beiden Achsen (13, 14) gelegen ist und in der Leerlaufstellung der Bedienung mit diesen fluchtet.

4. Vorrichtung nach einem der vorhergehenden Ansprüche, **dadurch gekennzeichnet, dass** die Nokke (18a, 18b) von der Kante einer Öffnung (16) im Arm (7) gebildet wird, mit dem sie fest verbunden ist.

5. Vorrichtung nach Anspruch 4, **dadurch gekennzeichnet, dass** die Öffnung (16) symmetrisch zur Mittelebene (P) des Arms (7) in dem sie vorgesehen ist, zwei Teilstücke ($16_a$, $16_b$) umfasst, die in etwa ein V formen und jeweils eine Nocke ($18_a$, $18_b$) bilden, um wechselweise mit dem Finger (15) zusammenzuwirken, je nachdem, ob der Schaltvorgang in der einen oder anderen von zwei entgegengesetzten Richtungen erfolgt.

**Claims**

1. Mechanical transmission device (1) for the control of a stepped-ratio gearbox (5), in which a driving arm (7) and a driven arm (11), connected respectively to an operating lever (2) and a component (4) of the gear box, pivot respectively on two parallel fixed axes (13, 14) and are connected together by a linking means (15, 16), **characterised in that** the linking means comprises a pin (15) of one (11) of two arms, parallel to the two axes (13, 14) and co-operating with a cam ($18_a$, $18_b$) that is integral with the other arm (7) and the profile of which is such that the position of the contact between the pin (15) and the cam ($18_a$, $18_b$), together with the line (L-L) of action of the force (F) transmitted by that contact, evolve during a manoeuvre of changing from a gear such that the ratio $\frac{N}{M}$ between the pivoting effort transmitted to the driven arm (11) and that applied to the driving arm (7) is at its maximum about halfway along the manoeuvre stroke.

2. Device according to Claim 1, **characterised in that** the pin (15) co-operates with the cam ($18_a$, $18_b$) by way of a roller (17).

3. Device according to one of Claims 1 and 2, **characterised in that** the pin (15) is located between the two axes (13, 14) and, when the control is in dead centre, is in alignment with said axes.

4. Device according to one of the preceding claims, **characterised in that** the cam ($18_a$, $18_b$) is constituted by an edge of a slot (16) made in the arm (7) with which it is integral.

5. Device according to Claim 4, **characterised in that** the slot (16) comprises, symmetrically with respect to the median plane (P) of the arm (7) comprising it, two sections ($16_a$, $16_b$) forming approximately a V shape and each constituting a cam ($18_a$, $18_b$) for co-operating alternately with the pin (15) depending on whether the change manoeuvre is performed in one or other of two opposite directions.

Fig.1

Fig.2

Fig.3

Fig.4